Europäisches Patentamt

European Patent Office

Office européen des brevets

(19)

(11) Veröffentlichungsnummer: **0 149 180**
A2

(12) **EUROPÄISCHE PATENTANMELDUNG**

(21) Anmeldenummer: 84115795.1

(22) Anmeldetag: 19.12.84

(51) Int. Cl.⁴: **B 32 B 3/28**
B 32 B 15/08, B 65 D 77/20

(30) Priorität: 24.12.83 DE 3347020

(43) Veröffentlichungstag der Anmeldung:
24.07.85 Patentblatt 85/30

(84) Benannte Vertragsstaaten:
AT BE CH DE FR GB IT LI NL SE

(71) Anmelder: UNILEVER NV
Burgemeester s'Jacobplein 1 P.O. Box 760
NL-3000 DK Rotterdam(NL)

(84) Benannte Vertragsstaaten:
BE CH DE FR IT LI NL SE AT

(71) Anmelder: UNILEVER PLC
Unilever House Blackfriars P O Box 68
London EC4P 4BQ(GB)

(84) Benannte Vertragsstaaten:
GB

(72) Erfinder: Keller, Erhard
Neuenrieder Strasse 45
D-8951 Ronsberg(DE)

(74) Vertreter: Hutzelmann, Gerhard et al,
Ulmer Strasse 18 Postfach 26 80
D-8960 Kempten/Allgäu(DE)

(54) **Deckelplatine aus Aluminiumfolie.**

(57) Deckelplatine aus einem Laminat, das aus einer Aluminiumfolie und wenigstens einer Kunststoffschicht besteht zum Aufsiegeln auf Kunststoff-Oberflächen. Die Kunststoffschicht besteht aus einem EVA - PE - Gemisch und die Platine ist zur Erzielung einer Planlage geprägt. Bevorzugtes Prägemuster ist ein Leinendessin.

Fig.3.

7  3  50  40

U 7008(K)EU                                    Unilever N.V.

### Deckelplatine aus Aluminiumfolie

Die Erfindung betrifft eine Deckelplatine aus einem Laminat, das aus einer Aluminiumfolie und wenigstens einer Kunststoffschicht besteht, die zum Aufsiegeln auf den Rand eines Behälters dient, der aus Kunststoff besteht bzw. mit einer Kunststoffschicht überzogen ist, wobei die Kunststoffschicht des Laminats der Deckelplatine aus einem Gemisch aus wenigstens einem Äthylvinylacetat-Copolymer und einem Äthylen-Polymer besteht.

Derartige Deckelplatinen haben - insbesondere, wenn die Kunststoffschicht auf die Aluminiumfolie aufextrudiert ist - den großen Nachteil, daß sie sich nach dem Ausstanzen zusammenrollen, was für ihre Weiterverarbeitung sehr ungünstig ist. Man war daher gezwungen, das Ausstanzen erst in der Siegelvorrichtung oder sogar nach dem Aufsiegeln vorzunehmen, da dann ein Einrollen nicht mehr stattfinden kann.

Der Erfindung liegt die Aufgabe zugrunde, Deckelplatinen der genannten Art so auszugestalten, daß der Einrolleffekt nicht oder nur unwesentlich eintritt.

Diese Aufgabe wird erfindungsgemäß dadurch gelöst, daß die Deckelplatine linienförmig geprägt ist, wobei die Prägelinien in einem Winkel zueinander verlaufen, verhältnismäßig lang ausgebildet sind, und daß sich jede Prägelinie vorzugsweise über die gesamte Platine erstreckt.

Mit einer solchen Prägung ist die Rollneigung der gestanzten Platinen so weit reduziert, daß sie sich ohne weiteres verarbeiten lassen. Sie können beispielsweise als Stapel der Siegeleinrichtung zugeführt werden, da sich auch die Entstapelung durch die Prägung vereinfacht.

Als sehr günstig hat sich dabei herausgestellt, wenn erfindungsgemäß die Prägetiefe etwa 40 bis 150 µm und vorzugsweise 90 µm beträgt.

Die Prägelinien können erfindungsgemäß in einem beliebigen Winkel zueinander verlaufen; als besonders günstig hat sich jedoch herausgestellt, wenn der Winkel zwischen den Prägelinien etwa 90° beträgt.

Sehr günstig ist es auch, wenn erfindungsgemäß die Prägelinien etwa ein Leinenmuster darstellen.

In der Zeichnung sind Ausführungsbeispiele der Erfindung dargestellt. Dabei zeigen:

Fig. 1    einen Querschnitt durch einen Abschnitt einer Deckelplatine,

Fig. 2    eine Draufsicht auf eine Deckelplatine mit Prägelinien, die im spitzen Winkel zueinander angeordnet sind und

Fig. 3    eine Draufsicht auf eine weitere Deckelplatine mit rechtwinkligem Prägemuster.

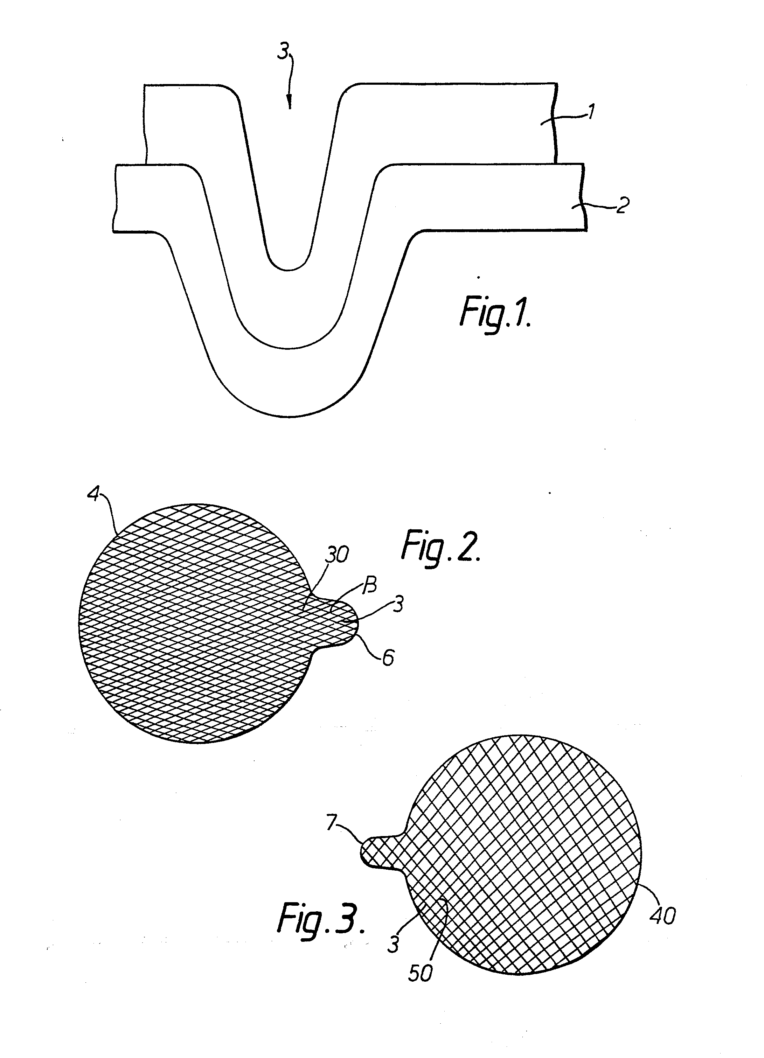

In Fig. 1 ist eine Aluminiumfolie 1 gezeigt, die im Extrusionsverfahren mit einer Kunststoffschicht 2 beschichtet ist. Für diese Kunststoffschicht 2 ist ein Gemisch aus Äthylenvinylacetat-Copolymer und Äthylen-Polymer verwendet, mit dem sich hervorragende Siegeleigenschaften auf unterschiedlichsten Gegenmaterialien ergeben. Sehr bewährt hat sich diese Siegelschicht in Verbindung mit Polystyrol, Polypropylen, Polyäthylen und PVC als Gegenschicht. So konnte mit diesem Gemisch die Siegeltemperatur auf 130 bis 180° gesenkt werden, ohne dadurch die Festigkeit und Verschlußsicherheit der Siegelnaht zu beeinträchtigen. Gleichzeitig wurde damit ein leichtes Öffnen ohne Materialeinrisse erreicht.

Die Aluminiumfolie 1 wurde nach ihrer Beschichtung mit der Kunststoffschicht 2 mit Prägerillen 3 versehen, die etwa 90 µm tief waren. Dargestellt in Fig. 1 ist diese Prägung von der Aluminiumseite her, eine Prägung von der Kunststoffseite her ist aber ebenso möglich. Beide Prägungen haben den Effekt, daß Deckelplatinen ausgestanzt werden können, die keine oder nur eine äußerst geringe Rollneigung haben.

In Fig. 2 ist eine solche Deckelplatine 4 dargestellt, die mit sich kreuzenden Prägelinien 3,30 versehen ist. Der Winkel ß zwischen diesen Prägelinien beträgt etwa 45°.

Beim Ausführungsbeispiel in Fig. 3 ist eine Deckelplatine 40 mit Prägelinien 3,50 versehen, die rechtwinklig zueinander verlaufen.

Bei beiden Ausführungsbeispielen ist die Deckelplatine mit einer Aufreißlasche 6 bzw. 7 versehen, die in der Winkelhalbierenden der Prägelinien verläuft, wodurch auch das Abreißen der Deckelplatine durch die Prägelinien verbessert wird.

U 7003(K)EU                                          Unilever N.V.

Patentansprüche

1.  Deckelplatine aus einem Laminat, das aus einer Aluminiumfolie und wenigstens einer Kunststoffschicht besteht, die zum Aufsiegeln auf den Rand eines Behälters
dient, der aus Kunststoff besteht bzw. mit einer Kunststoffschicht überzogen ist, wobei die Kunststoffschicht
des Laminats der Deckelplatine aus einem Gemisch aus
wenigstens einem Äthylenvinylacetat-Copolymer und einem
Äthylen-Polymer besteht, **dadurch gekennzeichnet,** daß
die Deckelplatine (4,40) linienförmig geprägt ist,
wobei die Prägelinien (3,30,50) in einem Winkel zueinander verlaufen, verhältnismäßig lang ausgebildet sind
und daß sich jede Prägelinie vorzugsweise über die
gesamte Platine erstreckt.

2.  Deckelplatine nach Anspruch 1, **dadurch gekennzeichnet,**
daß die Prägetiefe der Prägelinien (3,30,50) etwa 40
bis 150 µm, vorzugsweise 90µm beträgt.

3.  Deckelplatine nach Anspruch 1 oder 2, **dadurch gekenn-**
**zeichnet,** daß der Winkel zwischen den Prägelinien(3,50)
etwa 90° beträgt.

4.  Deckelplatine nach Anspruch 1,2 oder 3, **dadurch gekenn-**
**zeichnet,** daß die Prägelinien (3,50) etwa ein Leinenmuster darstellen.

Fig.1.

Fig.2.

Fig.3.